# EUROPEAN PATENT APPLICATION

(11) **EP 1 195 266 A2**
(43) Date of publication of application: **10.04.2002**
(21) Application number: 01122656.0
(22) Date of filing: 28.09.2001
(51) Int. Cl.: B42C 19/02

(54) **System and method for visual representation and manipulation of tabs on a product printer**

(30) Priority: 06.10.2000 US 684126; 09.03.2001 US 803387
(71) Applicant: Heidelberger Druckmaschinen Aktiengesellschaft, 69115 Heidelberg (DE)
(72) Inventor: Hansen, David Robert, Honeoye Falls, NY 14472 (US); Hull, Thomas Richard, Spencerport, NY 14559 (US); Roztocil, Tomas, Caledonia, NY 14423 (US); Savino, Ronald, Rochester, NY 14612 (US)
(74) Representative: Franzen, Peter

(57) **Abstract**

A graphic user interface for controlling a production printer is disclosed. The graphic user interface displays representations of the document to be produced by the production printer. Further, the interface provides visual indicators to indicate the presence of ordered media within the document as well as the attributes applied to the pages of the document corresponding to the ordered media. The graphic user interface allows the operator to view the applied page features for each page of ordered media in the document to verify they are correct prior to producing the document on the production printer. Further, the operator can modify incorrectly applied page features or add additional page features to correct errors.

## Description

### BACKGROUND

While just about every computer user owns their own printer and is capable of producing high quality documents, the ability to produce such documents in high volume and with special finishing features, such as binding, is still within the purview of the commercial print shops and corporate copy departments due to the high cost and operational complexities involved. High volume, finished production of documents is typically referred to as production printing. A production printer is a printing device capable of rapid continuous production of large volumes of documents. Typically these printers have high paper handling capacity, the ability to draw on multiple media types from multiple sources and the ability to automatically finish a document such as by adding a binding. Despite the automation provided by the production printer and the proliferation of computer technology, especially in the area of desktop publishing, production printing is still a complicated and often manual process.

In a typical print shop, customers bring in original documents which they want turned into a finished product such as a bound booklet, a tri-fold brochure or a tabbed three ring bound notebook. In addition, they typically need a large volume of the finished product, for example, one thousand brochures. The combination of the original documents plus the instructions for producing the finished product is called a "job". The documents can be brought in either in hard copy or electronic form, such as on floppy disk, compact disc or tape or can be transmitted to the print shop over a network such as the Internet.

After handing over the documents to the clerk, the customer relays his instructions for preparing the finished product. The clerk will note these instructions on a "ticket" or "job ticket". The job ticket is typically a piece of paper with all of the instructions written on it for producing the finished product. As mentioned above, this is known as job. The job will then be handed to an operator, who runs the production printer, to produce the finished output. The operator's job is to prepare the document for production, load the appropriate materials, such as paper stock and binding materials, into the production printer and ensure that the finished output is correct.

While the job of the operator seems simple, there are many issues which quickly complicate it. Often, the documents provided by a customer are not ready to be run on the production printer. Some documents provided by a customer are merely raw manuscripts requiring basic formatting, such as margins, typography, etc. Other documents may be formatted but such formatting might not take into account the requested binding. For example, the text of the document is too close to the margin, therefore, when the finished product is bound, some of the text will be obscured. Some documents, such as books, require special care so that, for example, the first page of every chapter appears on the front of a page, also known as imposition. Other forms of imposition include booklet/pamphlet imposition or n-up imposition. Or the customer may bring in multiple documents and ask that these "chapters" be assembled into a book, with a cover and binding.

Other issues which complicate the production printing job are determining and loading the correct media into the production printer. Often, jobs will require many different paper types, such as different stock weights or different colors. In addition, some jobs require the insertion of tab stock at specific points within the document. Still other jobs may require the adding of a Bates number or other annotation to the document.

With such a complicated production process to produce finished output, errors are bound to occur, such as loading the wrong paper stock in the printer or setting a margin too close to a binding. Production printers run at very high speeds, often producing output greater than 1 page per second therefore, errors in the finished output may not be caught before a significant amount of time and resources have been wasted.

Accordingly, there is a need for an efficient system and method for managing production printing and ensuring error-free output.

### SUMMARY

The present invention is defined by the following claims, and nothing in this section should be taken as a limitation on those claims. By way of introduction, the preferred embodiments described below relate to an interface, implemented in a computer, for controlling a production printer. The interface comprises a display and a first page representation located on the display and operative to represent a portion of a document to be produced by the production printer, the portion characterized by the applicability of at least one ordered media attribute. The interface further includes a first attribute representation associated with a first of the at least one ordered media attribute and located on the display, the first attribute representation comprising a symbolic representation operative to visually indicate on the display, the applicability of the first of the at least one ordered media attribute to the portion.

The preferred embodiments further relate to a method, implemented in a computer, for controlling a production printer comprising a display. The method comprises: displaying a page representation on the display representing a portion of a document to be produced by the production printer, the portion characterized by the applicability of at least one ordered media attribute; and indicating, visually, on the display, the applicability of the at least one ordered media attribute to the portion utilizing an associated symbolic representation of the at least one ordered media attribute.

Further aspects and advantages of the invention are discussed below in conjunction with the preferred embodiments.

### BRIEF DESCRIPTION OF THE DRAWINGS

- FIG. 1: depicts a flow diagram illustrating a preferred production printing workflow.
- FIG. 2: depicts a flow diagram showing the user functionality workflow of the preferred embodiment
- FIG. 3: depicts a graphic user interface according to a first embodiment.
- FIG. 4: depicts a graphic user interface according to a second embodiment.
- FIG. 5: depicts a library of symbolic icons representing various media/finishing attributes for use with the embodiment of Figure 4.
- FIG. 6: depicts an exemplary tab separator page set for use with the preferred embodiment.

### DETAILED DESCRIPTION OF THE PRESENTLY PREFERRED EMBODIMENTS

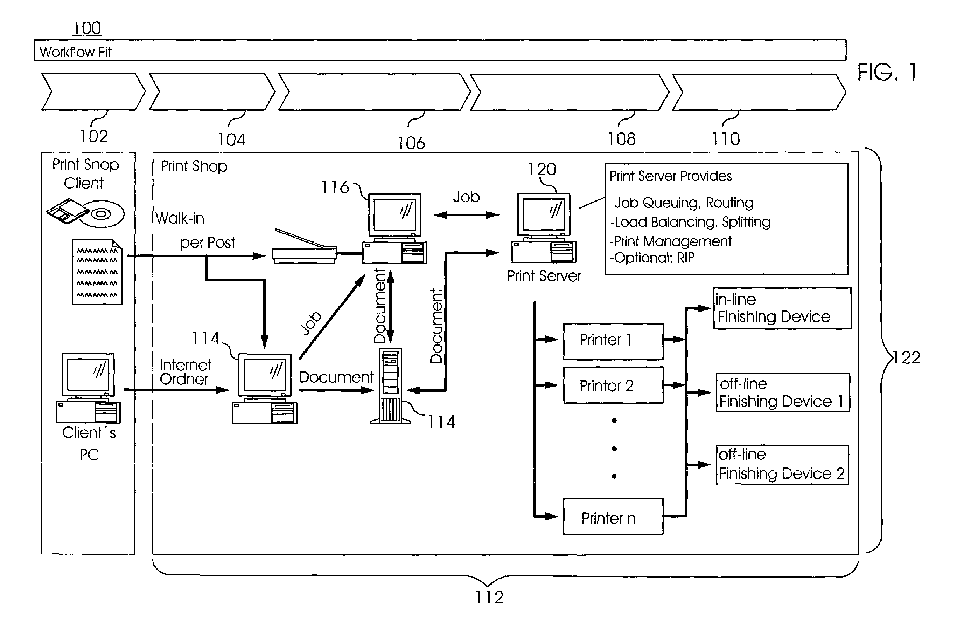

Referring now to Figure 1, there is shown a flow diagram illustrating the production work flow 100 in a typical production print shop such as a commercial high volume copy or print shop. A workflow is defined as the tasks, procedural steps, organizations or people involved, required input and output information, and tools needed for each step in a business process. A workflow approach to analyzing and managing a business or process such as production printing can be combined with an object oriented approach, which tends to focus on the discrete objects and processes involved such as documents, pages, data and databases. For the purposes of this disclosure, the term "object oriented", when applied to the disclosed embodiments, does not imply that an object oriented programming approach is the only method of implementation of the disclosed embodiments.

Figure 1 further depicts a typical computer network 112 for use in a print shop. In a typical digital print shop, there will be a network 112 of computer work stations 114, 116, servers 118, 120 and high volume output devices 122 which make up the computer network 112. The servers 118, 120 include network servers 118 and print servers 120. The topology of the network 112 is typically structured so as to align with the workflow 100 of the print shop. The network 112 may be implemented as a wired or wireless Ethernet network or other form or local area network. Further the network 112 may include wired or wireless connections to wide area networks such as the Internet and connections to other local area networks such as through a virtual private network.

The production workflow 100 includes the procedural stages of job origination 102, job submission 104, job preparation 106, print production 108 and final fulfillment 110. Alternatively, one or more of these procedural stages may be combined as well as there may be other additional procedural stages. Job origination 102 is the procedural stage of receiving the documents and instructions, which together are defined as a "job", from the customer. Job origination 102 can occur when a customer physically brings his job, whether in hard copy or electronic form, to the print shop or otherwise transmits the job to the print shop, whether by phone, fax, postal mail, electronic mail or over a local area or wide area network such as over the Internet. Note that a job may contain more than one document and more than one set of instructions. For example, a job may contain many documents, each being one chapter of a book, along with a document containing a cover for the book. This exemplary job may include the instructions for producing the body of the book from the individual chapter documents and another set of instructions for producing the cover. In addition, there may be a third set of instructions for assembling the cover to the body of the book.

Job submission 104 is the receipt of the job by the print shop and the entering of the job into the print shops production system or workflow. Typically the instructions from the customer will be written down on a special form, known as a "ticket" or "job ticket". A ticket may also be electronically created and maintained. Furthermore, pre-defined tickets may be available for standardized instructions. For example, the shop may have a pad of pre-printed tickets with the instructions to duplicate the documents, three hole punch the final output and assemble the punched final output in a three ring binder. If this is a common request by customers, such pre-printed tickets can save time and resources. All the order taking clerk need do is fill in any customer specific details such as the number of copies to produce. Pre-defined tickets standardize operations and prevent errors in the transcription of instructions from the customer. In very simple print shops, job submission 104 may simply be the receiving of the original documents and instructions along with the creation of a ticket, placing the job in a paper folder and setting it in a physical queue for later handling in subsequent procedural stages.

In print shops which handle jobs electronically, job submission 104 requires entering the job into the shops electronic production system. For documents which are brought in by the customer as hard copy, the documents must first be scanned electronically into the shop's computer system. For documents delivered in electronic form, the document data files must be loaded on the shop's computer system.

For the job submission stage 104, the computer network 112 will include one or more "store front" workstations 114. The store front workstations 114 are computer systems placed at the order taking desk, at a manned clerk's station or set out for customer self service use. These workstations 114 are used for the job submission stage 104 and typically will be configured to handle many different electronic media types such as floppy disk, compact disc, tape, etc. These stations 114 may also be configured to receive jobs over the Internet or other form of network connection with customers. Further, these workstations 114 are typically configured to read many different electronic file formats such as those used by the Microsoft Office™ family of products manufactured by Microsoft Corporation, located in Redmond, Washington or various other desktop publishing program file formats such as Aldus Pagemaker™ or QuarkXpress™. In addition, these stations 114 can also read "ready for printer" (also known as "print ready" or "page description language" ("PDL")) file formats, which will be discussed later, such as Portable Document Format™ ("PDF"), Postscript™ ("PS") or printer control language ("PCL"). Job preparation stations 114 can also accept image formats such as Tagged Image File Format ("TIFF"), bitmap ("BMP") and PCX. These stations 114 may also include a scanner for scanning hard copies of documents into the computer system. Scanners typically are complicated devices to operate and some print shops may prefer to locate the scanners in the job preparation stage 106 for use solely by trained personnel as will be discussed below. In addition, the store front computers 114 also provide the ability to generate a ticket, electronically or in hard copy form, for the job containing all of the instructions for completing the production printing task. This process of generating the ticket may be automated, involving pre-defined tickets, manual or a combination thereof, and is discussed in more detail below.

Job preparation 106 involves preparing the documents for printing according to the instructions in the ticket. For documents that are submitted in hard copy form, job preparation 106 may include scanning the documents and creating a faithful and error free electronic reproduction. The documents, once in electronic form, must also be distilled down/normalized i.e., converted into a common file format that the print shop can use to both edit and print the documents. This alleviates the need for operators to deal with multiple different programs and eliminates the need to assemble complex documents together for printing using different electronic file formats.

For example, a customer may bring in two different documents, one being the body of a book and the other being the photographs to be inserted at specific pages. The customer may then instruct that the photographs be inserted at particular pages and that the final assembly have continuous page numbers added. The body of the book may be in Microsoft Word**™** format while the images of the photographs are in Adobe Photoshop™ format. While the operator could figure out at which pages the images will be inserted and appropriately number the pages of the book and photographs using each individual software package, this is a very complex and time consuming process. It also requires that the operator be trained and familiar with a range of software packages and runs the risk that he will not be familiar with the particular package that the customer used. Therefore, it is more efficient to distill each of the various file formats into a unified format which allows the operator to prepare the job using a single software interface. In the preferred embodiments, all documents, whether provided in hard copy or electronically, are distilled or converted into a "ready for printer" or "print ready" file format. In the preferred embodiments, the Portable Document Format™ is used as the ready for printer format, developed by Adobe Systems, Inc., located in San Jose, California.

A ready for printer file format is defined as a file format which contains both the data to be printed along with printer control instructions that can be directly interpreted by the internal processing engine of a printer or other form of hard copy output device in order to rasterize the data image onto the output media. Rasterization is the placement of image data at a specific location on the output media. Such file formats include Portable Document Format™ ("PDF") and Postscript™ ("PS") both manufactured by Adobe Systems, Inc., located in San Jose, California, as well as printer control language ("PCL"), manufactured by Hewlett Packard, located in Palo Alto, California. Examples of non-ready for printer formats include the native application file formats for personal computer application programs such as Microsoft Word™. These file formats must be first converted to a ready for printer file format before they can be printed. Furthermore, some image file formats, such as the Tagged Image File Format ("TIFF") contain bit image data only which is already in a format which specifies its output location on the output media and does not contain printer control instructions for interpretation by the internal processing engine of the printer and therefore, for the purposes of this disclosure, is not a ready for printer file format. By using a ready for printer format, rasterization of the image data can be delayed as close as possible to the final placement of the image data on the output media. This allows the most efficient use of the production print device 122 by allowing its internal control logic to optimize the rasterization process resulting in output that is more likely to match with the operator's expectations.

For the job preparation stage 106, the computer network 112 includes job preparation stations 116 and network servers 118 coupled with the store front workstations 114 over the network 112. Herein, the phrase "coupled with" is defined to mean directly connected to or indirectly connected with through one or more intermediate components. Such intermediate components may include both hardware and software based components. The job preparation stations 116 preferably execute workflow management software, described in more detail below, which allows the operator to manage, edit and print jobs. It will be appreciated that the functionality of the store front workstations 114 and the job preparation workstations 116 could be combined on one workstation which serves both purposes. The network server(s) 118 includes a document library which allows manipulation, management, storage and archiving of jobs, or just their respective documents and/or tickets, as well as facilitates and manages the flow of jobs from the store front computers 114 to the job preparation stations 116 and from the job preparation stations 116 to the print servers 120 or the production output devices 122. Exemplary document libraries include DocSmart™ document library manufactured by MosaicSoft, Inc., located in Laguna Hills, California and Wipro Infotech, a division of Wipro, Ltd., located in Bangalore, India, Intra.Doc™ document management system manufactured by Intranet Solutions, Inc., located in Eden Prairie, Minnesota and the DOCFusion document management system manufactured by Hummingbird, Inc., located in York, Ontario, Canada. In the preferred embodiment, the job preparation stations 116 are Imagesmart™ Workstations, manufactured by Heidelberg Digital, L.L.C., located in Rochester, New York. Alternatively, an appropriate computer hardware platform such as that comprising a Pentium™ class processor or better, manufactured by Intel Corporation, located in Santa Clara, California, 64 megabytes of RAM or more, a 20 gigabyte hard disk or larger and appropriate display device may be used. Further, in the preferred embodiment, the network servers 118 preferably comply with the Open Document Management Architecture ("ODMA") standard and provide document management capabilities and scaleable storage.

The job preparation workstations 116 also provide the capability of the print shop to add value to the print production process by offering services to the customer. Such services include the ability to modify documents provided by the customer to add features that the customer could not or would not add himself. Such features include adding page numbers across multiple documents, Bates numbering, adjusting page layout for tab stock and aligning the output to account for binding. Further the job preparation stations 114 provide the capability to fix errors in the documents such as removing artifacts in scanned images and masking over unwanted text or markings. The job preparation stations 114 can also be used to prevent inaccuracies in the finished output caused by the printing or binding process. Such inaccuracies include binder's creep which happens after a document is imposed into a booklet/pamphlet using a signature imposition. Binder's creep occurs when the placement of the images on the paper fails to account for the thickness of the binding as a function of the number of pages in the book causing the image on the pages to shift inward as you get closer to the cover. Binder's creep is prevented by gradually shifting the image placement over the range of pages when performing the signature imposition on the document. In addition, the job preparation station 116 allows the operator to manage and layout the document pages for final output, also known as "imposition" and "signature imposition". In addition, the operator can shuffle pages, reverse pages, insert blank pages, trim and shift pages, create bleeds and place multiple pages on a sheet, also known as "n-up" to create proof sets, brochures or pamphlets, etc. Further the job preparation station 116 permits the operator to add annotations to the document such as Bates numbers, page numbers, logos and watermarks. All of these service add value to the final output. Formatting and other modifications to the document can be globally applied to the entire document, such as a shifted margin or may be applied only to select pages. Such alterations to the document are known as document/page features or attributes. Further, these alterations are also known as document or page exceptions since they typically override specific instances of the original document formatting as set by the customer. In one embodiment, page features also include embedded commands directed to the production output device 122 or its operator to cause certain actions or processes to take place. Such commands include instructing the device 122 or operator thereof to remove pages or documents (such as by directing them to a particular output exit or physically removing them) or load particular media such as ordered media (such as by using a particular paper supply or by physically loading the media) (see below), or commands which direct pages to a particular output exit.

The next stage in the print production workflow 100 is the print production stage 108. In the print production stage 108, the final form of the documents for printing is sent to a print server 120 which will distribute the job to the final output device 122. In manual print shops, this stage 108 would be similar to an operator manually taking the ready for production job over to the desired output device 122 to start the job. The print production stage 108 manages the output resources of the print shop. Such management includes queuing jobs to the proper devices 122 in the shop, routing jobs to available devices 122, balancing the load placed on the various devices 122, and pre-processing jobs, such as splitting or RIP'ing the job, prior to sending it to a particular device 122. RIP stands for Raster Image Processor and is the hardware and/or software which converts ready for printer data into raster images. It is also a common term for rasterizing a page image on to the output media.

The print server 120 used in the print production stage 108 is coupled with the job preparation stations 116 and the network server 118 over the network 112. Further, the print server 120 is coupled with the various output devices 122 in the print shop. Note that some output devices 122 may not support electronic transfer of the data to be output and may require a manual step for operation. Such devices may include a special binding machine which requires that the partially finished documents be manually transferred to the binding machine to complete the production. The print server 120 is preferably implemented as a separate computer coupled with the network 112, however, software based print servers running on a network server 118, job preparation station 116 or store front workstation 114 may also be used. In the preferred embodiment, the print server 120 includes an independent computer workstation, typically running a UNIX or Windows NT operating system, a software print server engine and a software print server application. The print server application offers the user interface ability to configure and manage the print server operation. The print server engine performs the automated processes of the print server. These processes include spooling and queuing jobs and job content (i.e. the document), directing the jobs to specific production output devices based on the attributes of the print job and how these attributes are satisfied by the print engine, load balancing jobs among the various production output devices to keep all printers fully utilized, e.g. to split color from black and white jobs, and acting as a communication gateway where it can accept multiple input communication and print protocols translating them to the communication and print protocol the production output device 122 understands.

The final stage of the production printing workflow 100 is the final fulfillment stage 110. The final fulfillment stage 110 is the stage where the finished output is produced on the production output device 122. A production output device is a computer output device, such as a printer, designed for high volume production of printed documents. Such devices preferably include the ability to produce large quantities of documents with mixed media types and various degrees of finishing, such as stapling or binding, at very high speed. Exemplary output devices include the Digimaster™ Digital High Volume Printer manufactured by Heidelberg Digital, L.L.C., located in Rochester, New York and the NexPress™ Color printer manufactured by NexPress, Corporation, located in Rochester, New York.

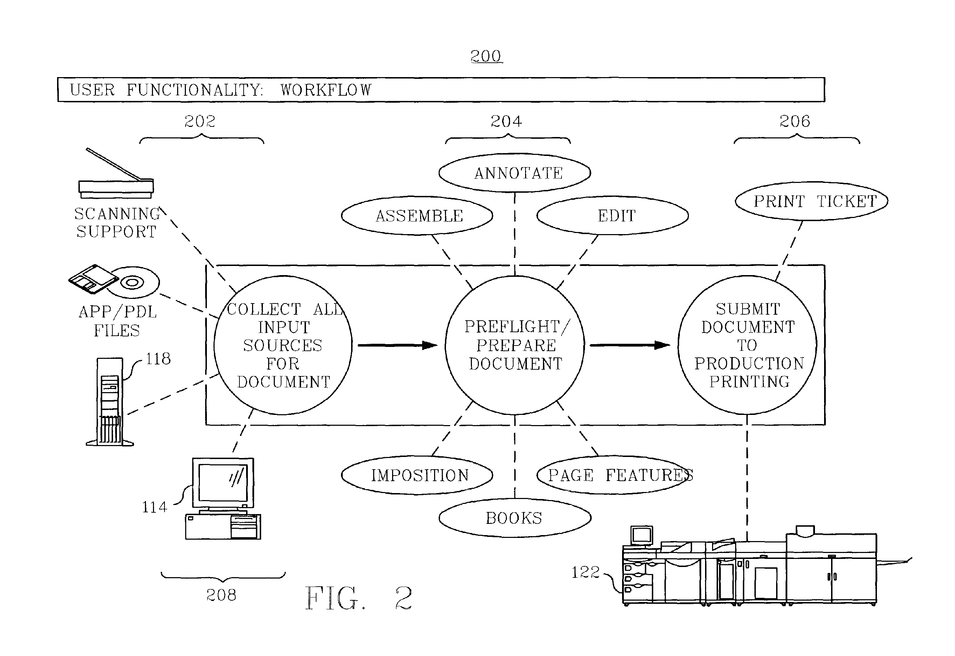

Referring now to Figure 2, there is shown a flow diagram showing the user functionality workflow 200 of the preferred embodiment job submission and preparation stages 104, 106. The user workflow 200 includes an input source stage 202, a preflight stage 204 and a production stage 206. In the input source stage 202, all of the documents of the job are collected together from the different input sources 208. As detailed above, all of the collected documents are converted to a ready for printer format, preferably a Portable Document Format™. This conversion can be a manual or automated process or a combination thereof. For example, a special directory can be created on the network server 118 where data files in various file formats can be placed, for example, by the clerk who accepts the documents from the customer and inputs them into the store front workstation 114. Automated logic which watches this directory, will see the placement of files and automatically convert them (or flag them for manual conversion) into a ready for printer format. Any documents which the automated logic cannot handle can be flagged for manual conversion. The converted documents are then passed to preflight stage 204 where they are prepared for production. This transfer of converted documents can occur by moving the documents to a special directory on the network server 118 where they can be accessed by the job preparation stations 116 or by transmitting the documents to the job preparation station 116. This process can be manual or automated and may involve placing the documents in a queue of documents waiting to be prepared for production. Further, this process may include a manual or automated determination of the capabilities, skill level or training level of the various operators currently logged into the available job preparation stations 116 as well as the current load/backlog of job in their respective queues. Taking these factors into account, job can be automatically or manually routed to the operator best able to handle the job both technically and in an expedient manner. This functionality can be implemented by creating an operator database which tracks the capabilities, skill level and training level of the various operators who work in the print shop. This database can be coupled with queue management software which balances the loads/backlogs of job at each station 116.

In the preflight stage 204, the documents can be assembled, such as in a book, annotated, edited, and have imposition or other page features applied. Once the documents are prepared for production, they are passed to the production stage 206. In the production stage 206, the prepared documents along with the production instructions (from the tickets) are submitted to the print server or directly to the production output device 122 using a file downloader such as the Print File Downloader™ application program manufactured by Heidelberg Digital, L.L.C., located in Rochester, New York. This user functionality workflow 116 may be implemented as a combination of hardware, software and manually executed components and may involve one or more of the components detailed in the production printing workflow above.

In the preferred embodiments, the user functionality workflow is preferably implemented as a workflow management software program and interface executing on the job preparation workstation 116. The preferred workflow management software is visually oriented using an object oriented graphic user interface ("GUI") approach which integrates control of the workflow functionality in a single interface. While the visual and operational appearance of the management software is object oriented, the implementation of the software may be by an object oriented programming language or a non-object oriented programming language as are known in the art.

In the GUI interface, documents, tickets and other entities and operations (collectively "objects") are visually represented on the workstation 116 display, such as with icons, tree structures and pull-down menus, and may be interacted with using known devices and methods such as utilizing a mouse or track ball to control a visually represented pointing device which is then used to click, select, drag and drop the displayed representations. Such manipulation of the visual representations results in manipulation of the underlying objects (documents, tickets, and other entities and operations). Furthermore, the GUI also permits creation and manipulation of relationships and associations among the various objects and visually displays such relationships and associations. Relationships and associations may be displayed, for example, using a hierarchical approach like a tree structure or file folder structure or using some alternate form of visual indication. It will be appreciated that graphic user interfaces are well known in the art and that there are many software development packages available which can be used to develop a GUI. Such packages include the Open Software Development Kit and the Microsoft Foundation Class Library ("MFC"), both available from Microsoft Corporation, located in Redmond, Washington.

Further, the preferred GUI utilizes a document centric approach providing a centralized viewing window for viewing documents being worked on. In the preferred embodiment, the document viewing functionality is provided by the Adobe Acrobat software program, manufactured by Adobe Systems, Inc., located in San Jose, California.

As was noted above, the workflow management software integrates applications which implement, control or manage the stages of the production printing workflow 100. These applications include inputting documents from various sources, document assembly including the creation and manipulation of books, document editing, document annotation, document library access on the network server 118, setting and manipulation of page features, creation and manipulation of job tickets and printing.

The workflow management software is capable of receiving input from various different sources. Such sources include hard copy originals input via a scanner, native application formats such as the Microsoft Office™ Product suite and desktop publishing applications such as QuarkXpress™, manufactured by Quark. Inc., located in Denver, Colorado and FrameMaker™, manufactured by Adobe Systems, Inc., located in San Jose, California. Further the software can accept Tagged Image File Format ("TIFF") documents as well as documents already in a ready for printer format such as PDF, PS or PCL. For hard copy input via a scanner, the software supports industry standard scanner interfaces, TWAIN, as defined by the TWAIN group located in Boulder Creek, California and the Image and Scanner Interface Specification ("ISIS") developed by Pixel Translations, Inc., located in San Jose, California and also specified via American National Standards Institute specification ANSI/AIIM MS61-1996. Using these standard interfaces, the workflow management software receives the scanned image data directly in the ready for printer format. An exemplary scanner for use with the preferred workflow software is the Imagedirect™ Scanner manufactured by Heidelberg Digital, L.L.C., located in Rochester, New York.

The preferred workflow management software also provides ODMA support for interfacing with document libraries. In addition, the provided ODMA support further extends the functionality of the document library to handle management, storage and archiving of compound documents (described below) and tickets. This allows libraries of standardized tickets to be created or facilitates updates and reprints of compound documents such as books.

Once documents are loaded into the workflow management software, tools are provided to perform value added services and prepare the documents for production. Assembly is the process of arranging or rearranging pages or adding or removing pages within a document. Assembly also includes imposition where page positions are forced such as when the first page of a chapter is forced to the front side of the paper. The workflow management software provides cut, copy, paste and move functionality operable on 1 or more pages. This functionality is preferably implemented via pull-down menus, pop up dialog boxes or on screen option palates or buttons as provide by the graphic user interface. In addition, the results of the respective operations are shown in a visual representation of the document in the centralized document viewing window on the job preparation station 116 display.

The workflow management software further provides support for editing and annotating the document. Tools are provided for image object area editing of a scanned page including erase inside and outside an area, cut, move, copy and paste area as well as pencil erase. Page editing tools are also provided for editing on one or more pages including area masking and cropping. Tools are also provided for annotating documents including alpha-numeric and graphic annotations. Exemplary annotations include page numbering and Bates stamping. The tools further provide for placing images behind the document content, also known as watermarking. Annotation can be performed on any portion of one or more pages. For alpha-numeric annotations, the font size and style are controllable. In all cases, the results of the respective operations are shown in a visual representation of the document in the centralized document viewing window on the job preparation station 116 display. In the preferred embodiments, edits or annotations can be created or manipulated by pointing to a visual representation of the document and/or pages within the document and selecting, dragging, dropping or clicking the representation and/or selecting from a menu of options, where the selection of a particular option causes the associated edit or annotation to be applied to the specified portions of the document. Alternatively, a palate of options may be displayed from which the user may choose an option to apply to selected portions of the document. Further, the interface may provide for a dialog box or other visual control for inputting control values for the edit or annotation such as the starting number of a Bates range.

The workflow management software preferably provides further support for compound documents which are documents comprised of one or more other documents, such as books comprised of chapters or course packs comprised of one or more excerpted sources. Compound documents take advantage of the object oriented nature of the workflow management software. A compound document ("CD") is a collection of one or more documents which have a particular ordering to them such as the chapters of a book.

The CD further contains an automatically generated assembled document which is a single document containing the whole assembled CD. Tools are provided which allow simple management of the documents of a CD, assembly and updating of the documents into the assembled document and selective document manipulation, such as selective printing, of the documents within the CD. Tools are also provided which can interpret the content of the documents within the CD and automatically generate a table of contents in the assembled document. A compound document otherwise acts just like a document and can be edited, annotated, etc. and have tickets associated with it. Further, a compound document can contain other compound documents such as in the case of a multi-volume book. The individual documents and compound documents within the compound document further retain their independent existence and can be edited or printed independently of the CD and shared with other CD's with those edits being either automatically or manually updated into the assembled document within a particular CD. The workflow management software further displays a visual representation, such as with a hierarchical or tree structure, showing the compound document and any associated documents and tickets. In the preferred embodiments, compound documents can be created or manipulated by pointing to the visual representations of one or more documents and/or a visual representation of a CD and selecting, dragging, dropping or clicking and/or selecting from a menu of options, where the selection of a particular option causes the associated feature to be applied to the selected documents or compound documents. Alternatively, a palate of options may be displayed from which the user may choose an option to apply to selected compound documents. Further, the interface may provide for a dialog box or other visual control for inputting control values for the compound documents such as margin values. For example, a user may select one or more documents and then choose a create CD option from a pull down menu. The workflow software then creates a visual representation of the CD on the display showing the association of the CD to the selected documents. Alternatively, the user may first create a visual representation of a CD and then drag and drop the visual representations of one or more documents onto the CD visual representation. The workflow software then creates the appropriate logical associations of the data for which the visual representations represent.

The workflow management software is also preferably programmed with data about the different production output devices 122 in the print shop or otherwise available and their capabilities or other equipment, such as finishing equipment, which can be utilized either automatically or manually. The software provides tools which allow the operator to set page features/formatting which are made possible by those specific capabilities. Such page features include the plex of the document such as duplex or simplex (double sided or single sided output), binding options, such as stapling or hole punching and the availability and control settings for handling tab stock or ordered media. The preferred embodiments preferably support all of the features of the Digimaster™ line of high volume digital printers manufactured by Heidelberg Digital, L.L.C. located in Rochester, New York. In the preferred embodiments, these page features can be set by selecting or pointing to a visual representation of one or more pages and selecting from a menu of options, where the selection of a particular option causes the associated feature to be applied to the selected pages. Alternatively, a palate of options may be displayed from which the user may choose an option to apply to selected pages. Further, the interface may provide for a dialog box or other visual control for inputting control values for the feature such as the type of tab stock. Setting page features for specific pages encodes instructions to the production output device 122 for implementing those features within the ready for printer formatted file. When the production output device 122 receives the file for printing, it will interpret those instructions to implement the desired feature. For page features which the current device 122 cannot handle, the device 122 can signal the operator that manual intervention is required and direct the operator through the appropriate steps to implement the page feature and complete the job. This may include instructing the operator to remove partially finished documents and transfer them to a binding machine for finishing or instructing the operator to load a specific media type or tab stock into the device 122.

Tools are further provided by the workflow management software to support electronic versions of tickets for specifying production output device instructions and parameters, as well as other finishing steps which may or may not be automated, which are global to the document, e.g. job level features or global document attributes. These include such attributes as the general media type or color to use and the method of binding such as stapling. Tickets, also referred to as print tickets or job tickets, can exist independently of documents or compound documents as was mentioned above. They are independently visually represented on the display by the workflow management software. Tools are provided for manipulating tickets, such as saving, storing and associating them with documents or compound documents in addition to editing their options. In the preferred embodiments, tickets can be manipulated just like documents, using pointing, clicking, selecting, dragging and dropping. For example, a ticket can be associated with a document by selecting the ticket and dragging and dropping it on a particular document. The workflow management software then preferably visually displays the association by showing the ticket under the hierarchy of the document. Once associated, the options set by the ticket will apply to the associated document or compound document. The options represented by the ticket may be set by selecting the ticket to bring up a dialog box or pull down option menu which displays the available options and allows modification of the option values. Tickets associated with documents can be manipulated with the document. For example, saving a document save all of its associated tickets. Furthermore, the workflow management software provides the capabilities to create libraries of standardized tickets which can be used, for example, to standardize procedures across multiple franchised print shops.

Finally, the workflow management software provides tools to send the prepared documents and any associated tickets to the production output device for final production. In the preferred embodiments, documents or compound documents can be sent to a production output device by selecting, clicking or dragging the visual representation of the document or compound document to a visual representation of the print server or output device. Alternatively, the user may select an appropriate option from a pull-down menu, pop up dialog box or button palate. The workflow management software supports standard interfaces and protocols to production output devices and print servers. Further, tools are provided for managing, selecting and monitoring multiple production output devices. These tools provide visual feed back of each of the devices status to the user such as the current job queues.

As described above, once a document or job is ready to be produced, i.e. has been through job preparation 106 and the pre-flight stage 204 of the workflow, it is transmitted to the production stage 206 of the workflow for final fulfillment 110 and output on the production output device 122. While at this stage, the document/job should be perfect and ready to be printed, errors can and often still occur in the process. Such errors may result from operator error or oversight during job preparation 106 or from data or transmission errors as the job is moved from stage to stage around the print shop's network. Often, these errors comprise either an incorrectly applied page feature (described in more detail below) or a defect in the original document which could have been corrected by the addition or modification of a page feature but either the page feature was never added/modified or somehow got removed or reverted to its original state. These errors represent latent defects which may not be caught until the finished output is proofed. The production stage 206 therefore represents the last opportunity to correct any such latent defects in the job before the actual physical generation of the output, i.e. the last opportunity to "soft-proof' the job. As was noted, an undetected or uncorrected error/defect in a particular job can result in a significant waste of the print shop's resources, including wasted media, wasted machine time and wasted operator time. In addition, these errant jobs incur the cost of sending the job back through job preparation 106 and the pre-flight stage 204 to correct the errors. This cost can be significant depending on the organization of the print shop and the location and work load on the job preparation stations 116 and their operators. Therefore, it is advantageous to provide a system for allowing an operator of a production output device to perform a final review of a job prior to its production and allow for any necessary corrections or adjustments.

Referring back to Figure 2, the production output device 122, which is preferably a Digimaster™ Digital High Volume Printer manufactured by Heidelberg Digital, L.L.C., located in Rochester, New York, further comprises an operator console 210 for controlling the production output device 122. The operator console 210 includes control input devices (not shown) such as a keyboard, mouse, trackball, touch pad, control buttons, knobs or sliders or other input control devices as are known in the art. The operator console 210 further includes a display output device 212 such as a CRT or LCD flat panel display, which may or may not be a touch sensitive input device as well. The display output device 212 displays status and control information about the production output device 122 and accepts input commands from the operator utilizing a graphic user interface coupled with the control input devices.

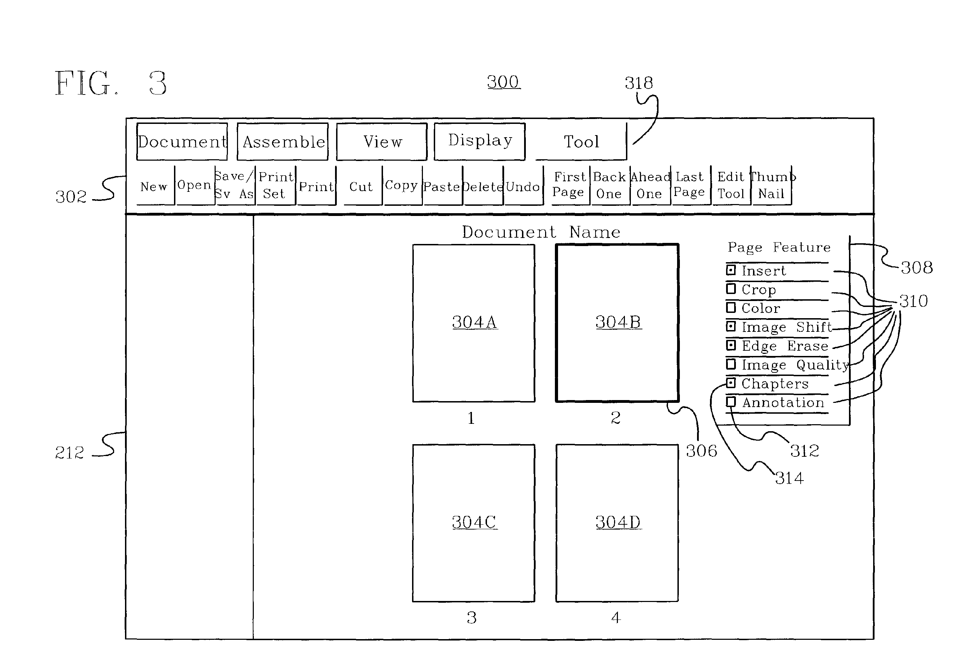

Referring now to Figure 3, there is shown a first embodiment of a graphic user interface 300 for use on the display output device 212. The interface 300 includes a button palette 302 and a page display window 316. The button palette 300 comprises control buttons 318 which control the various features and options of the interface 300. Exemplary buttons 318 and their functions include a "new" document button, an "open" document button, a "save/save as" document button, "print" document button, "cut", "copy", "paste" editing buttons and document and file navigation buttons as are known in the art. These buttons 318 may be interacted with using an input device such as a mouse, keyboard, or touch sensitive display 212. It will be appreciated by one of ordinary skill in the art that such button palettes 302 are well known and may be implemented in many ways and that the functionality of the buttons 318 may be alternatively implemented in other ways including keyboard based key sequences, menus and dialog boxes. The page display window 316 displays the current document which is being worked on. At any given time, a production output device 122 may have multiple jobs stored in an internal print queue/storage queued up for production. The interface 300 allows the operator to choose which job to work on and produce. This current job is displayed in the page display window 316 as described below.

The page display window 316 displays a visual representation of the document which is being produced. As shown in the figure, one way to display the document is to show four thumbnail images 304A-D of four pages of the document on the screen at a given time. The thumbnail image 304A-D shows a miniature representation of the page as it will look when it is printed, including representations of the content and formatting of the document. The operator can scroll through all of the pages of the document, four at a time, using the control buttons 318 in the button palette 302 (or alternatively, a scroll bar, scroll wheel or other navigation devices which are known in the art) and view all of the pages contained within the document. Alternatively, the page display window 316 can display more or less than four thumbnail images 304A-D, can display larger or smaller thumbnails images 304A-D, can display a single full page at various magnification levels and can be expanded to a full screen mode to utilize the full display area of the display output device 212. In full screen mode, the button palette 302 can be converted to a floating button palette 302 which hovers above the full screen display or can be hidden and triggered to appear when needed by the operator.

The page display window 316 allows the operator to see a quick summary of the page features applied to each of the pages of a particular document. As was discussed above, such page features include formatting attributes such as text margins, type fonts/styles, text alignment, text orientation and line and page breaks. Page features further include media attributes such as whether the paper is pre-hole punched or not, media size (letter, legal, A4, etc.), media color, media finish (glossy, matte, texture, etc.), media thickness and media type such as tab or card stock. Finally, the various page features also include finishing (imaging or printing) attributes such as media source, page image cropping, page image shifting (such as for binder's creep compensation), masking, plex (simplex or duplex), annotation (page numbers, Bates numbers, watermarks), insertion (alternate media such as tab stock or colored media), re-ordering, imposition, and binding such as stapling, hole punching or book binding.

As shown in the exemplary embodiment, the page display window shows four page representations 304A-D of four pages of the current document. In the preferred embodiment, these page representations 304A-D are thumbnail or miniature images 304A-D of the particular pages. When the operator wishes to view the page features which have been applied to a particular page (or group of pages) of the document, he/she selects the desired page (or group of pages) using an input device as described above to select the corresponding thumbnail image 304A-D. It will be appreciated that selection mechanisms in graphic user interfaces are well known. The interface 300 reflects the selection of a page by placing a selection indicator 306 on the selected page such as a darkened border or other visual indicator showing that a particular page (or group of pages) is selected. Once selected, a menu 308 can be viewed which lists descriptors 310 of the various available page features 310 along with an indicator for each feature 310 which indicates whether or not the particular page feature 310 applies to the selected page(s). Preferably, this menu 308 is displayed when an operator clicks a button, such as a right mouse button, located on a mouse type pointing device. In alternative embodiments, the menu 308 can be displayed automatically when a thumbnail image 304A-D is selected or can be displayed when an input key or button is pressed. Further, where the operator console 210 provides a pointing device, the menu 308 can be displayed when the displayed pointer is manipulated over a particular thumbnail image 304A-D (whether or not the thumbnail image 304A-D is selected).

As described above, the menu 308 lists descriptors 310 or descriptive text of the various available page features 310. Associated with each descriptor is an indicator 312 which is binary in operation and indicates whether or not the particular page feature has been set for the selected thumbnail image 304A-D. If the indicator 312 is asserted, this means that the particular page feature has been applied to the page represented by the thumbnail image 304A-D. If the indicator 312 is de-asserted, then the particular page feature has not been applied. In one embodiment, the indicator 312 is a check box which represents assertion of the indicator 312 with a check symbol 314. It will be appreciated that there are many different ways to visually indicate such a binary value. Further, many page features have various optional values associated with them. For example, the plex page feature has the possible values of simplex or duplex. Further, the shifting page feature has a value representing the degree and direction of image shift. In an alternative embodiment, these values can also be displayed in the menu 308 as associated with the page feature descriptor 310 and in place of, or in conjunction with, the indicator 312.

In another alternative embodiment, the operator can use the operator console 210 to select a page feature descriptor 310 from the menu 308. Such a selection can bring up a dialog box (not shown) which allows application or removal of the particular page feature and setting of any optional values. Further, the interface 300 allows formatting and other modifications to the page features of the document to be globally applied to the entire document, such as a shifted margin, or only applied to select pages. Further, in still another alternative embodiment, the interface 300 can also detect conflicts between page features and page features which are improperly set. For example, the interface 300 can determine that an annotation has been placed so as to run off the edge of the media. Further, the interface 300 can detect that both stapling and three hole punching have been selected and that the staples are positioned in the same location as the hole punches. Such errors can be flagged such as through an error indicator, dialog box or other warning which informs the operator of the error and allows him to correct it.

In this way, the operator can preview the pages of a document along with the page features that have been set and determine if everything is correct for final production. If there are errors, the operator can immediately correct the errors without having to return the job to the job preparation stations 116. The corrections can be immediately made and previewed for correctness and then the job can be produced on the production output device 122.

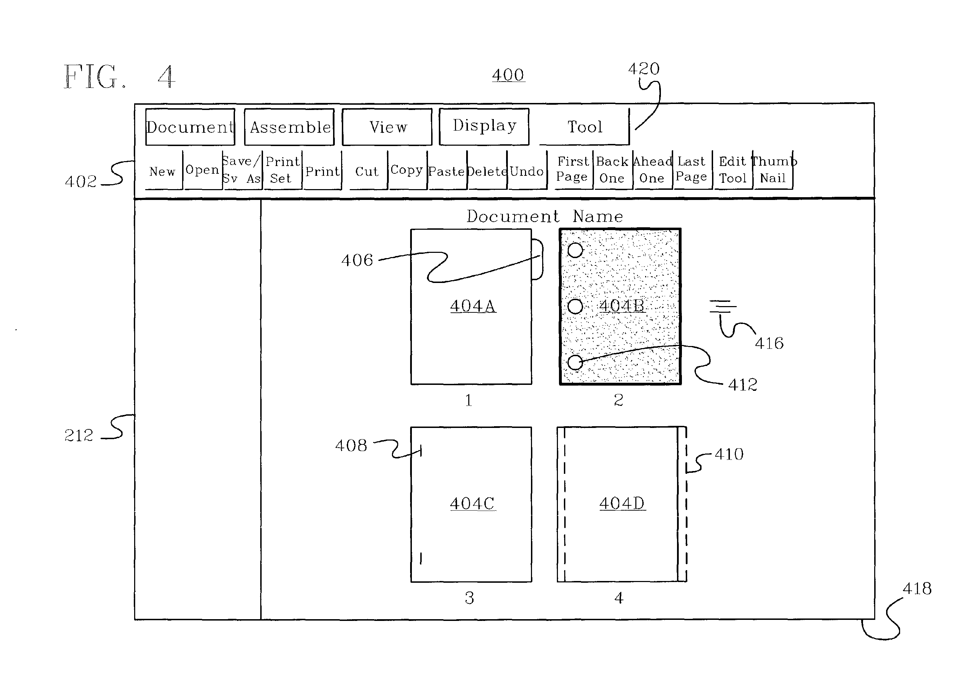

Referring to Figure 4, there is shown a second embodiment of a graphic user interface 400 for use on the display output device 212. The interface 400 is identical to the interface 300 and includes a button palette 402 with buttons 420 and a page display window 418 which shows thumbnail images 404A-D representing the pages of the document to be produced. Further, interface 400 provides for a symbolic attribute representation or representative icons of the applied page features (media/finishing attributes) to be displayed in conjunction with the thumbnail images 404A-D. The application of particular page features is visually represented in the page display window 418 on the corresponding thumbnail image 404A-D. For example, application of a page feature for three hole punching would cause visual representations of the holes 412 in the pages to appear on the thumbnail image 404B of the selected pages. This would allow the operator to see the results of the page feature and determine, for example, if the body text of the page is too close to the holes.

Each page feature or media/finishing attribute is associated with an icon or symbolic attribute representation which can be overlaid on the thumbnail image 404A-D. Other examples include displaying a tab 406 on the thumbnail image 404A to indicate that the particular page is to be printed on tab stock, displaying the thumbnail image 404B in a particular grayscale, pattern or color 414 to indicate that the page is to be printed on a certain color media, displaying staple symbols 408 on the thumbnail image 404C to indicate the location for stapling and displaying a margin guide 410 on the thumbnail image 404D to indicate image shifting. Where a symbolic attribute representation cannot be easily inserted or intuitively displayed with the thumbnail image 404A-D, an icon 416 can be displayed next to the thumbnail image 404A-D to indicate the presence of the particular page feature. For example, and icon 416 can be displayed next to the thumbnail image 404B to indicate a page insertion. In this particular example, additional information can be displayed next to, or otherwise in conjunction with, the icon 416 indicating, for example, the page number of the inserted page(s) relative to the number of total pages in the document to indicate the to the operator the impact on the page count of the insertion. It will be appreciated that each of the symbolic attribute representations and icons can be displayed alone or in combination with others to reflect the combination of page features applied to the particular page. Further, the symbolic attribute representations/icons, or combinations thereof, can further be displayed in conjunction with status or settings data indicating to the operator information about the applied page features. Note that while the page features are visible in the page display window 418, they are inserted in the ready for printer format code so as not to actually print out when the document is sent to the production output device. The logic which implements the symbolic representations of the page and document features knows of the capabilities and operations of the production output device 122. For example, the logic knows that the automatic stapler in the production output device 122 can only staple along the left edge of the paper. Therefore, if the job calls for stapling along the right edge, an error can be flagged.

Particular page features can be added, deleted or modified by pointing to the symbolic attribute representation or icon with the pointing device and selecting it to bring up a dialog box for controlling the particular feature. Further, menus or buttons can be provided which list the available page features and offer the ability to apply a particular page feature to a selected page representation 404A-D or group of selected page representations 404A-D. Alternatively, the interface 400 can be combined with the interface 300 to offer a pop-up menu 308 for viewing, selecting, adding and modifying page features in conjunction with the symbolic attribute representations displayed in conjunction with the page representations 404A-D. For example, using the input device to select or click on an icon/symbolic attribute representation can display a pop up menu or dialog box allowing the user to configure or modify the represented page feature.

In particular, visual representation of page features is especially useful when a document involves tabbed separator pages or other types of ordered media inserts. When page features defining the insertion of tab separator pages or other ordered media and their attributes are applied to the document, the operator is able to see in the page display window 418, a visual representation of the inserted ordered media within the document along with any attributes of that media. For example, an operator may see a visual representation of a tab separator page within the document, such as a thumbnail representation as described above. The visual representation may also display attributes of that separator page such as the position and size of the tab cut and any printing/content or labeling appearing on either side of the separator page or the tab cut. Other attributes may also be displayed such as ordering information which indicates to the operator where a particular insertion of ordered media fits into the document in relation to other ordered media inserted in the document. For example, the display may indicate that the particular tab separator page is the third separator page inserted in the document. This would allow the operator to ensure that the tab cuts are positioned appropriately among the inserted separator pages (see below for more detail) and that the tab labels are correct.

Specifically, tab stock or other ordered media inserts introduce additional complexities into the production workflow. These complexities arise from the nature of ordered media and the disconnected nature of the operator who prepares the job at the job preparation station 116 and operator who operates the production output device 122 and loads the required media into the device 122. Specifically, ordered media refers to media that is separately created by (such as on a separate output device, e.g. a color printer), arrives at or is ordered by the print shop in a specific configuration and with specific details which require special handling, such as particular orientation and location within a document. As will be described below, this includes media, such as pre-cut tab media or pre-printed media, which has a particular ordering relationship, such as a sequence, requiring ordered insertion into a document. Generic media, such as blank paper or blank card stock does not typically require such special handling.

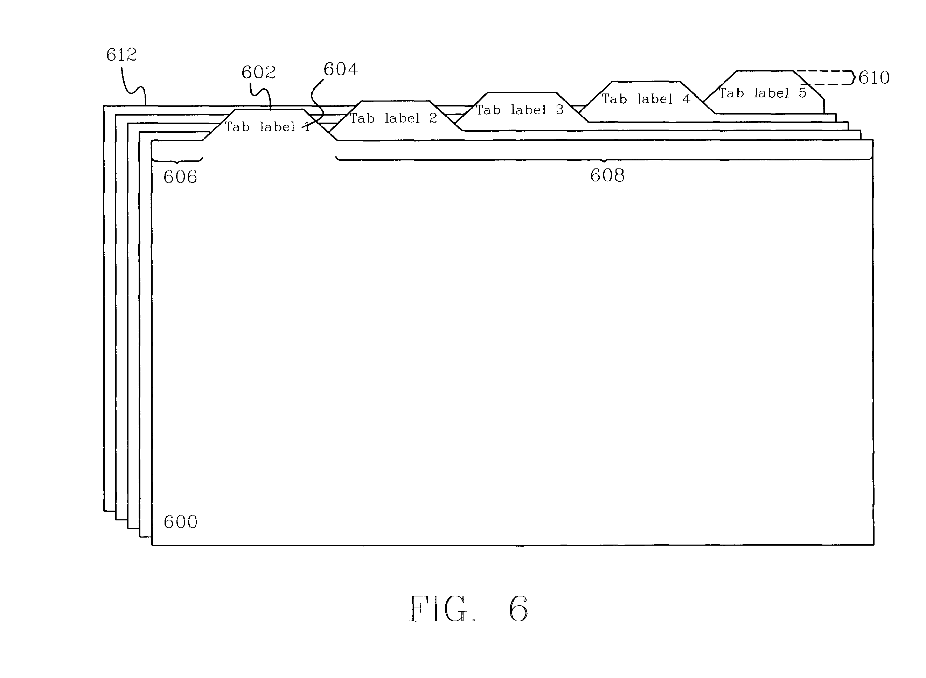

Figure 6 depicts a typical tab separator page 600 which may be represented as a thumbnail image 404A in the display window 418. The tab separator page 600 is typically the same size or substantially the same size as the other media types used in the document with the addition of a tab cut 602 extending from one edge of the page 600, typically, the edge opposite the bound edge of the document, although the top or bottom edges may also be used. On the thumbnail image 404A, the tab cut 602 is represented with a visual indicator/icon 406. The tab cut 602 extends beyond the edge of the other pages of the document so as to provide a visual indicator of the location of some portion of the document, such as the beginning of a section or chapter, or the location of an appendix. The position of the tab cut 602 is defined by the tab cut left indent 606 and the tab cut right indent 608. When viewing the tab separator page 600 with the bound edge on the left hand side and the tab cut 602 extending from the right hand side, the tab cut left indent 606 defines the distance from the top edge of the separator page 600 to the top edge of thee tab cut 602 and the tab cut right indent 608 defines the distance from the bottom edge of the separator page 600 to the bottom edge of the tab cut 602. The sum of the tab cut right and left indents 606, 608 plus the width of the tab cut 602 equals the width of the page 600. In an alternative embodiment, the tab cut left and right indents 606, 608 define the distance from their respective edges to the usable/printable area of the tab cut 602, thereby preventing printing on the chamfer or radius area of the tab cut 602.

Where multiple tab separator pages 600 are used, it is desirable that the sequential tab cuts 602 not directly overlap to further allow a reader to spot each tab separator page 600 and quickly identify the indicated section of the document. Tab separator pages 600 are therefore supplied to the print shop in ordered sets 612. A tab set 612 typically includes five (as shown in the figure) or eight (not shown) ordered/sequential tab separator pages 600, each with a different non-overlapping tab cut 602 position. It will be appreciated that the number of tab separator pages 600 within a tab set may be greater than or less than five or eight. Further, a production output device 122 may include the capability to produce tab separator pages 600 from blank stock using a cutting or punching apparatus. Within each tab set 612, subsequent tab separator pages 600 differ in the position of the tab cut 602, i.e. the tab left indent 606 and the tab right indent 608 are incrementally adjusted for each tab separator page 700. Where the document includes more tab separator pages 600 than are included in a single tab set 612, more than one tab set 612 may be used. In this way, the tab cut 602 of one particular tab separator page 600 will overlap only every fifth or eighth tab cut 602 (depending on the number of tab cuts 602 in a set 612) of the remaining tab separator pages 600, creating an easily accessible and manageable document.

However, problems can occur when a document uses less than a full tab set 612 (or multiples thereof). It is desirable that each copy of a document produced have tab separator pages 600 with their tab cuts 602 in identical positions within the document, from copy to copy. Typically, this means that the first tab separator page 600 should have its tab cut 602 in the top most position (i.e. the lowest left tab cut indent 606). In the case of a document that does not require a full tab set 612, or multiple thereof, the remaining tab separator pages 600 of that incompletely used set 612 would have to be discarded and a new set 612 loaded before the next copy of the document could be produced. Therefore, the operator of the job preparation station 116 and the operator of the production output device 122 need to coordinate on the size of the tab set 612 to use for the particular job so as to make the most efficient use of the tab separator pages 600. Further, information about the tab separator pages 600 included in the document has to be made available to the production output device 122 so that it (or the operator) knows when to insert the tab separator page 600, as these pages 600 are typically stored in an alternate media store within the device 122.

Alternatively, tab separator pages 600 may be pre-printed with ordered information such as chapter or section numbers. These pre-printed tab separator pages 600 must then be inserted into the document at the proper locations by the production output device 122 or its operator. All of the tab separator pages 600 for a single document may be supplied to the print shop as a set 612 with one set provided for each copy of the document to be produced. It will be appreciated, that other pre-printed media may be supplied with ordered information already printed on it. As used herein, ordered media refers to any media having a unique or inherent order or sequence to it requiring ordered/sequential insertion into another document or production through the production output device 122. It will be appreciated that the disclosed embodiments contemplate any ordered media and are not limited to tab separator pages 600.

In addition, tab separator pages 600 and their tab cuts 602 can have labels 604 or other information, collectively referred to as "tab labels," printed on them during the printing process, just like any other page in the document. This requires coordination between the operator of the job preparation station 116 and the operator of the production output device 122 to coordinate which type of tab sets 612 will be used. In order to position tab labels 604 properly, the operator of the job preparation station 116 needs to know what kind of tab stock the document will be printed on so that the positions and sizes of the tab cuts 602 are known allowing the labels to be properly positioned/aligned, such as centered, and formatted. In one embodiment, the operator of the job preparation station 116 specifies the type of tab set 612 (or other ordered media) to use so that the operator will know how they will appear when output by the production output device 122, including the size and position of the tab cuts 602. The type of tab set 612 to load is encoded within the document. When the document is submitted to the production output device 122 to be produced, the device 122 determines the type of tab set 612 that needs to be loaded and notifies the operator to load the proper media via the display output device 212 or other indicator and/or commands the device 122 to use media from a particular supply source within the device 122.

Alternatively, the operator of the job preparation station 116 may not know which tab sets 612 are on hand in the print shop. In this case, the operator specifies the insertion of tab separator pages 600 or other ordered media, the order of insertion and specifies any tab cut labeling, formatting, such as orientation, e.g. portrait or landscape, font and style, or other attributes and relative positioning of the labels. However, the operator does not specify the type of tab set 612 to use or the absolute label position. When the job is submitted to the production output device 122, the production output device 122 or its operator, using the interface 400, dynamically determines the type of tab sets 612 that are on hand and instructs the production output device 122 to fit the specified tab separator pages 600 to the available tab sets 612. The production output device 122 then automatically figures out the placement of tab labels 704 on the tab cuts 702 for each tab separator page 600. The thumbnail images 404A-D are then appropriately updated to display the tab separator pages 600 as they will appear when printed to allow the operator to verify and/or modify the attributes of the separator pages. In this way, the operator of the production output device 122 can make the most efficient decision on which type of tab set 612 to use at the time of production without impeding the job preparation station 116 operator. This functionality further offers the advantage of simpler document management. The operator of the job preparation station 116 need only associate tab labels and their attributes with the pages where they are to be inserted. If those pages are moved around the document, or otherwise the order is altered, the tab labels will follow appropriately. For example, a document may contain an index section, the first page of which also contains a bleed tab. That index section may be subsequently moved behind another tabbed section or deleted altogether, necessitating a change in the tab label positions of one or more of the tab separator pages in the document. When the document is ultimately printed, as described above, the tab labels will be appropriately positioned and output. This applies to bleed tabs created on regular media as well. In this case, the bleed tab label will move with its associated page and the position will be appropriately adjusted relative to all of the other tab labels at the time of printing.

To implement the dynamic capability described above the tab information (label and attributes, including plex and relative positional information) is stored with the document data file (in the preferred embodiment, within the PDF file as a private tag) so that it can be retrieved and properly placed when printed. The information is stored so that it can be identified as tab information, retrieved from the document, removed or repositioned or otherwise modified to accommodate changes to the type of tab stock used or changes in relative positioning within the document. At the time the tab is actually created, the tab label size, horizontal and vertical positions, rotation and which page edge to place it on are determined.

As described above, the user interface 400 provides the capability to set page features for the various pages in the document. In the case of tab separator pages 600 or other ordered media, the software provides the capability to set the various attributes or parameters of the ordered media. This capability may be provided through a pull down menu or dialog box or other user input interface as described above. In one embodiment, an interface is provided where the operator may specify all of the tab separator pages to be inserted in the document. This interface is available within or outside of a document allowing the operator to create separator pages 600 as a separate document. A dialog box is presented to the operator where the operator may specify the ordered media attributes such as tab type, the number of tab cuts 602 in the tab set 612, the total number of tab separator pages 600 to be inserted in the document, the tab media size, the tab media orientation, the tab set 612 order, the tab labels 604 and appearance/formatting (font, style, position, orientation, etc.) thereof, the tab edge offset 610 and the tab cut left and right indents 606, 608 for each separator page. Once these attributes are specified, the software automatically creates the tab separator pages 600 which the operator can then insert into the document in the proper locations using the user interface 400 as described above. Alternatively, the dialog box may also allow the specification of the location within the document for each tab separator page 600 created.

For the tab type attribute, the operator may specify cut tabs or bleed tabs. Bleed tabs may or may not be printed on tab cut type tab separator pages 600. The tab label 604 of a bleed tab is printed up to the very edge of the page or tab cut so that the printing, and therefore the separator page 600, is visible within a stack of pages by looking at the edge of the stack. Bleed tabs may be created on ordinary media by printing up to the very edge of the media or may be created on oversized media, by printing in a particular position on the media and the trimming the media down to size to achieve the same effect. While bleed tabs need not be created on ordered media, one will appreciate the application of the embodiments disclosed herein for the creation, insertion and visualization of pages within a document having ordered attributes. Further, when specifying bleed tabs, the fill percentage of the bleed area may also be specified as well to control the shade and appearance of the tab label 604.

The number of tab cuts 602 in the tab set 612 may be left blank to allow the operator of the production output device 122 to select the tab set 612 type. Where the number of tab cuts 602 in a tab set 612 is known, the software can use the total number of tab separator pages 600 used in the document to compute the number of remaining tabs in the last whole tab set when the total number of tab separator pages 600 is not an even multiple of the tab set 612. The interface 400 can then insert codes within the document that instruct the production output device 122 to automatically eject the unused tab separator pages 600 of the last set 612 prior to beginning production of the next copy of the document. Further, these codes may specify the output exit for the ejected tab separator pages 600 where more than one output exit is available on the production output device 122. The choice of output exit may further be specified by the operator as the pages 600 are to be ejected. Alternatively, the coding can cause the production output device 122 to instruct the operator, via the display output device 212 and/or interface 400, to remove the unused separator pages 600. The tab media size and orientation may be specified or may be automatically determined from the rest of the document into which the tabs are to be inserted. Common tab media sizes include 8 ½ x 11, 9 x 11, 8 ½ x 11 1/2, A4 tab and A4, although any media size supported by the paper handling systems of the production output device 122 can be used, whether available now or later developed. The tab set 612 order specifies the order in which pre-collated tab separator pages 600 appear within a tab set 612 or the way they must be loaded into the production output device 122, such as first tab first ("FTF") or last tab first ("LTF"), to be produced in the proper order. The specification of the tab labels 604 and their appearance allows the operator to specify the label text or images/icons for each separator page 600, font, font size, style and relative alignment (centered or justified) on the tab cut 602. These attributes may be specified as relative values to allow the production output device 122 or operator thereof to vary these values in the case where the tab set 612 type is unknown since the size of the tab cut 602 may change. For example, the production output device 122 can automatically ensure that tab labels 704 are centered on the tab cuts 602 no matter what tab set 612 type is used. The tab edge offset 610 specifies the margin between the tab label 604 and the edge of the tab cut 602. For the bleed type tab separator pages, the tab edge offset 610 will be zero. Further, for bleed type tabs without tab cuts 602, the tab cut left and right indents 606, 608 allow the operator to specify the position of the tab label 604.

In an alternative embodiment, the operator may further specify a plex attribute of the tab separator pages 600. This allows the creation and labeling of one (simplex) or both (duplex) sides of the separator page 600 and/or tab cuts 602. The plex attribute may further specify which side of the separator page 600/tab cut 602 a particular label 604 is to be printed on or this may be automatically/dynamically determined. The operator can visually check and verify the labeling as it will appear on each side of the tab cut 602 or separator page 600 itself, or other ordered media. For bleed tabs, this allows for printing the tab label 604 in the same relative position on both sides of the separator page 600 which makes label more visible within the document. Alternatively, the bleed tab labels for each side of a particular separator page 600 can appear in different positions. This functionality further takes into account that the bound and non-bound edges of the separator page changes relative to the content printed on the page depending on which side the user is viewing. In some cases, tab labels 704 are associated with the content on the page. Should editing, such as insertion or deletion, to other pages in the document cause the content of current separator page 700 to shift to the opposite face of the page, functionality is provided to automatically move the tab label 704 to the proper edge or allow the operator to manually do so. This prevents the tab label 704 from accidentally being printed on the bound edge of the document while keeping it properly located with its associated content.

Further, automated tab separator page 600 generation may be provided to automatically generate tab separator pages 600 in commonly or frequently used configurations. For example, a selection may be provided to have the software automatically create tab separator page 600 inserts such as monthly tabs (where each tab separator page 600 is labeled with one of the twelve months of the year), alphabetical tabs (where each tab separator page 600 is labeled with a letter), such as for use in a directory, quarterly tabs (where each tab separator page 600 is labeled with a calendar quarter), such as for use in a financial report, or numerical tabs (where each tab separator page 600 is labeled with a numeral). Further, an automated label 604 set configuration may be custom defined by the operator and stored for repeated use as a frequently used configuration.

In an alternative embodiment, tab separator pages 600 may be automatically generated based on bookmarks stored within the document printer ready pdf file. When converting documents from proprietary word processing formats, such as Microsoft Word, to the printer ready format, such as pdf, section headings or other markers/descriptors within the document can be automatically converted to bookmarks. Bookmarks make it easier to electronically locate portions of the document quickly when viewing or editing the document. The disclosed embodiments provide functionality to read these bookmarks from the printer ready document file and automatically convert them to labeled tabbed separator pages 600 inserted at the proper locations. This extends the automated workflow from document conversion through to tab creation, simplifying the operator's job in preparing the document for final production. Once the tab separator pages 600 are created and inserted, the operator can utilize the functionality disclosed above to edit and manipulate the tab separator pages and prepare them for output on the production output device 122 as disclosed.

The interface may further allow the operator to specify tab separator pages 600 one at a time within another document. This would allow the operator to add tab separator pages 600 on the fly as they edit the document. As tab separator pages 600 are inserted, the operator is informed of the tab separator page 600 order and the total number of tab separator pages 600 inserted. This allows the operator to keep track of the tab separator pages 600 used and figure out the best tab set 612 type to use.

As described above, the selection of a tab separator page 600 in a document displays a visual representation of that separator page 600 and its attributes in the page display window 418. This allows the operator to verify the attributes, such as the label position and formatting. Further, the selected tab separator page 600 may further be visually represented in relation to the other tab separator pages 600 inserted in the document, such as by displaying all of the tab cuts 602 in relation to the tab cut 602 of the selected page so that the operator may verify the tab cut 602 positions and ensure proper overlap, or lack thereof.

As was discussed above, tab or ordered media information comprise page features which are encoded within the document to instruct the operator and or control the production output device 122. These page features may be set in such a way as to allow production output device 122 or operator to change/override tab set 612 types or other tab attributes and have the tab separator pages 600 automatically adjust accordingly at production.

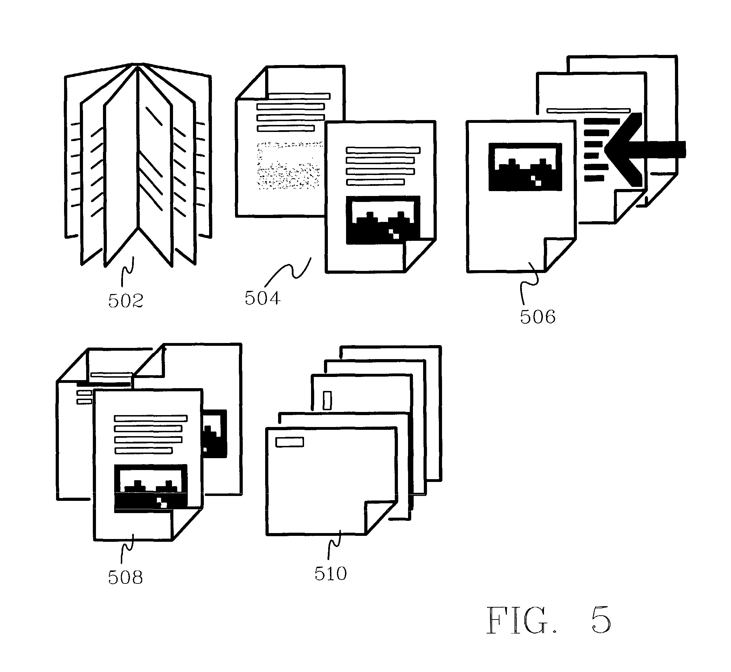

Referring to Figure 5, there are shown symbolic attribute representations or icons corresponding to various other page features, which include media and finishing attributes, which can be used with the disclosed embodiments. Such icons/features include chapters 502 which indicates the application of a form of imposition where the first page of chapter is forced to be the front page of a double sided page, copy improvement 504 which indicates the application of special filters or image processing algorithms to enhance the reproduction of the particular page (for photographs, etc.), page insertion 506 which shows that a photo, tab or other page is inserted at the indicated point (similar to the icon 416 in Figure 4), overlay 508 indicating the application of an image or text overlay or watermark and sub-set stapling 510 indicating that a sub-set(s) of the pages within the document are to be stapled or stapled differently than the remaining pages of the document (this is similar and can be combined with icon 408 in Figure 4 which can be used to show stapling all the way through the entire document. Other page features that can also be represented are edge erase (representative icons not shown in figure). It will be appreciated that there are many different ways to visually represent the various page features and that the disclosed embodiments are applicable to page features and icons presently existing and later developed.

It will further be appreciated that the graphic user interface 300/400 may also be implemented as a remote interface to the production output device 122 allowing control of the production output device 122 from a remote location. In one alternative embodiment, the graphic user interface is implemented as a client using Hypertext Markup Language ("HTML") and Hypertext Transport Protocol ("HTTP") layered on a Transport Control Protocol/Internet Protocol ("TCP/IP") based network to communicate with an HTTP server located in the production output device 122.

It is therefore intended that the foregoing detailed description be regarded as illustrative rather than limiting, and that it be understood that it is the following claims, including all equivalents, that are intended to define the spirit and scope of this invention.

## Claims

1. An interface, implemented in a computer, for controlling a production printer comprising:
a display;
a first page representation located on said display and operative to represent a portion of a document to be produced by said production printer, said portion **characterized by** the applicability of at least one ordered media attribute; and
a first attribute representation associated with a first of said at least one ordered media attribute and located on said display, said first attribute representation comprising a symbolic representation operative to visually indicate on said display, the applicability of said first of said at least one ordered media attribute to said portion.

2. The interface of Claim 1, wherein said at least one ordered media attribute comprises tab type.

3. The interface of Claim 2, wherein said tab type comprises a value specifying cut tabs.

4. The interface of Claim 1, wherein said at least one ordered media attribute comprises tab media size.

5. The interface of Claim 4, wherein said tab media size further comprises a value specifying 9 x 11, 8 ½ x 11, A4 tab or A4.

6. The interface of Claim 1, wherein said at least one ordered media attribute comprises number of tab cuts.

7. The interface of Claim 6, wherein said number of tab cuts comprises a number of tab pages in an ordered tab set.

8. The interface of Claim 1, wherein said at least one ordered media attribute comprises tab media orientation.

9. The interface of Claim 1, wherein said at least one ordered media attribute comprises total number of tab separator pages in said document.

10. The interface of Claim 1, wherein said at least one ordered media attribute comprises tab label edge offset.

11. The interface of Claim 1, wherein said at least one ordered media attribute comprises tab cut left indent.

12. The interface of Claim 1, wherein said at least one ordered media attribute comprises tab cut right indent.

13. The interface of Claim 1, wherein said at least one ordered media attribute comprises tab output order

14. The interface of Claim 13, wherein said tab output order further comprises a value specifying first-tab-first or last-tab-first.

15. The interface of Claim 1, wherein said at least one ordered media attribute comprises at least one tab label value.

16. The interface of Claim 15, wherein said interface is further operative to visually indicate on said display, said tab label value and a formatting of said tab label value as it will appear when printed on said production printer.

17. The interface of Claim 1, further comprising a user input device operative to allow a user to modify one or more of said at least one ordered media attribute.

18. The interface of Claim 1, further comprising a user input device operative to allow a user to specify at least one frequently used configuration of said at least one ordered media attribute, wherein said interface is further operative to generate at least one value of said at least one ordered media attribute based on said specified at least one frequently used configuration.

19. A method, implemented in a computer, for controlling a production printer comprising a display, said method comprising:
(a) displaying a page representation on said display representing a portion of a document to be produced by said production printer, said portion **characterized by** the applicability of at least one ordered media attribute; and
(b) indicating, visually, on said display, said applicability of said at least one ordered media attribute to said portion utilizing an associated symbolic representation of said at least one ordered media attribute.

20. The method of Claim 19, wherein (b) further comprises displaying a symbolic representation of a tab cut in relation to said page representation according to said at least one ordered media attribute.

21. The method of Claim 19, wherein said at least one ordered media attribute comprises tab type.

22. The method of Claim 21, wherein said tab type comprises a value specifying cut tabs.

23. The method of Claim 19, wherein said at least one ordered media attribute comprises tab media size.

24. The method of Claim 23, wherein said tab media size further comprises a value specifying 9 x 11, 8 ½ x 11, A4 tab or A4.

25. The method of Claim 19, wherein said at least one ordered media attribute comprises number of tab cuts.

26. The method of Claim 25, wherein said number of tab cuts comprises a number of tab pages contained in an ordered tab set.

27. The method of Claim 19, wherein said at least one ordered media attribute comprises tab media orientation.

28. The method of Claim 19, wherein said at least one ordered media attribute comprises total number of tab pages in said document.

29. The method of Claim 19, wherein said at least one ordered media attribute comprises tab label edge offset.

30. The method of Claim 19, wherein said at least one ordered media attribute comprises tab cut left indent.

31. The method of Claim 19, wherein said at least one ordered media attribute comprises tab cut right indent.

32. The method of Claim 19, wherein said at least one ordered media attribute comprises tab output order

33. The method of Claim 32, wherein said tab output order further comprises a value specifying first-tab-first or last-tab-first.

34. The method of Claim 19, wherein said at least one ordered media attribute comprises at least one tab label value.

35. The method of Claim 34, wherein (b) further comprises indicating visually on said display, said tab label value and a formatting of said tab label value as it will appear when printed on said production printer.

36. The method of Claim 19, further comprising:
(c) receiving modifications to said at least one ordered media attribute.

37. The method of Claim 19, further comprising:
(c) receiving a specification of at least one frequently used configuration of said at least one ordered media attribute; and
(d) generating at least one value of said at least one ordered media attribute based on said specified at least one frequently used configuration.

38. A graphic user interface for a production printer console for controlling the printing of a document and application of one or more media/finishing attributes, said one or more media/finishing attributed comprising at least one ordered media attribute, said document comprising one or more pages each comprising a subset of said one or more media/finishing attributes, at least one of said one or more pages comprising said at least on ordered media attribute, said graphic user interface comprising:
a page representation representing said at least one of said one or more pages to be produced;
a ordered media attribute representation coupled with said page representation and operative to symbolically represent said at least one ordered media attribute on said page representation.
